# EUROPÄISCHE PATENTSCHRIFT

(11) **EP 2 347 505 B1**
(45) Veröffentlichungstag und Bekanntmachung des Hinweises auf die Patenterteilung: **15.01.2014**
(21) Anmeldenummer: 09748742.5
(22) Anmeldetag: 23.10.2009
(51) Int. Cl.: H02P 6/00, G05B 11/26

(54) **ELEKTROMOTOR**
ELECTRIC MOTOR
MOTEUR ÉLECTRIQUE

(30) Priorität: 10.11.2008 DE 102008056577
(43) Veröffentlichungstag der Anmeldung: 27.07.2011
(73) Patentinhaber: EBM-PAPST Landshut GmbH, 84030 Landshut (DE)
(72) Erfinder: PFISTERER, Hans Jürgen, 49076 Osnabrück (DE); SCHUMBRUTZKI, Walter, 94419 Reisbach-Griesbach (DE); GIVIAN, Frederik, 84032 Altdorf (DE); SCHWARZMANN, Thomas, 49076 Osnabrück (DE); GARTNER, Stefan, 85461 Bockhorn (DE)
(74) Vertreter: Peter, Julian
(86) Internationale Anmeldenummer: PCT/EP2009/063974
(87) Internationale Veröffentlichungsnummer: WO 2010/052137

(56) Entgegenhaltungen:
- DE-C1- 10 250 616
- US-A- 5 848 282
- US-A1- 2006 238 154
- US-B1- 6 295 213
- US-B1- 6 404 157

## Beschreibung

Die vorliegende Erfindung betrifft einen Elektromotor insbesondere einen elektronisch kommutierten Gleichstrommotor (EC-Motor) und vorzugsweise für ein Gebläse.

Aus der Praxis ist seit über 20 Jahren insbesondere für den Leistungsbereich bis 5 kW der elektronisch kommutierte (EC)-Motor bekannt. Es handelt sich um einen kollektor- oder bürstenlosen Gleichstrommotor mit sehr gutem Wirkungsgrad auch bei kleinen Leistungen. Eine deutliche Wirkungsgradverbesserung beim EC-Motor ist durch den Wegfall der Schlupfverluste des Rotors, der Magnetisierungsverluste und der reduzierten Kupferverluste begründet. EC-Motoren können sowohl als Innenläufer- wie auch als Außenläufermotoren gebaut werden. Aussenläufer-EC-Motoren bieten wegen ihrer kompakten Bauart günstige Voraussetzungen im Ventilatorbau. Sie können beispielsweise direkt ins Laufrad integriert werden. Damit kann die Forderung nach Wegfall der Riemenantriebe in die Tat umgesetzt werden.

Aus der DE 69308338 T2 ist eine Bereitschaftsschaltung bekannt, um die Stromzufuhr zu einer Ansteuerstufe für einen Gleichstrommotor zu steuern oder regeln, im besonderen zu einem bürstenlosen Motor, der keine Fühler besitzt, um die Winkelstellung des Rotors abzutasten. Dabei besitzt die Ansteuerstufe einen Eingang für ein Bedarfssignal, das die gewünschte Drehzahl des Motors angibt, wobei das Bedarfssignal ein lineares Analogsignal oder ein digitales Signal mit Impulsbreitenmodulation (PWM-Signal) sein kann. Ferner enthält die Bereitschaftsschaltung:
- einen Eingangsanschluss, der mit dem Eingang der Ansteuerstufe verbunden werden soll;
- einen Kondensator;
- einen ersten und zweiten Stromgenerator;
- eine Umschaltstufe, die dazu dient, um wahlweise den ersten oder zweiten Stromgenerator mit dem Kondensator zu verbinden,
- eine erste Vergleicherstufe, deren Eingang mit dem Eingangsanschluss verbunden ist, während ihr Ausgang so an der Umschaltstufe liegt, dass dann, wenn das am Eingangsanschluss anliegende Signal einen vorgegebenen Schwellwert überschreitet, die Umschaltstufe den Kondensator mit dem ersten Stromgenerator verbindet, um den Kondensator mit einem konstanten Strom zu laden, und dann, wenn das Signal kleiner als der Schwellwert ist, die Umschaltstufe den Kondensator vom ersten Stromgenerator trennt und ihn so mit dem zweiten Generator verbindet, dass dieser ihn mit einem konstanten Strom entlädt; und
- eine zweite Vergleicherstufe, die dazu dient, um an ihrem Ausgang ein Steuersignal abzugeben, das dazu dient, um eine Stromzufuhr zur Ansteuerstufe zu ermöglichen, wenn die am Kondensator entwickelte Spannung einen vorgegebenen Schwellwert überschreitet.

Aus der Praxis sind noch weitere Motor- oder Gebläseabschaltungen über ein Relais oder einen Schalter bekannt. Das Dokument US2006238154 beschreibt eine Integrierte Schaltung mit Steuerungs- und Leistungsteil, die sich bei Unterschreiten einer bestimmten Drehzahl des Lüfterantriebs automatisch in einen Energiesparmodus überführt.

Es ist ein Ziel der vorliegenden Erfindung, die Stillstandsverluste, d.h. den Stromverbrauch, eines insbesondere elektronisch kommutierten Motors vorzugsweise eines Gebläses zu verringern.

Dieses Ziel wird mit einem Elektromotor nach dem Anspruch 1 erreicht.

Der Grundgedanke der Erfindung ist, die Niederspannungsversorgung eines insbesondere elektronisch kommutierten Motors beispielsweise eines Gebläses abschaltbar auszuführen und mittels eines Mikroprozessors das Sollwertsignal, wie beispielsweise ein analoges oder PWM-Signal, zu überwachen und die Niederspannungsversorgung bei einem Abschaltsollwert von beispielsweise Null und insbesondere nach einer vorgegebenen Zeit nach Erreichen und Beibehalten des Abschaltsollwertes abzuschalten und bei einem definierten Einschaltsollwert von größer Null einzuschalten.

Es ist von Vorteil, dass sich die Stillstandsleistung des Motors auf insbesondere zumindest annähernd 20 % oder weniger verringert, wie beispielsweise von 1,85 Watt auf weniger als 0,35 Watt. Damit wird eine wesentliche Energieeinsparung erreicht und die Energieeffizienz des Motors und somit des Gebläses deutlich gesteigert.

Insbesondere, aber nicht darauf beschränkt, ist die Erfindung vorteilhaft als Standby- oder Bereitschaftsschaltung in Heizungsanlagen zum Anschalten oder Standby- /Bereithalten der Niederspannungsversorgung bei der Steuerung des Gebläses eines Gasbrenners, bei dem das Gebläse leistungsabhängig gesteuert wird.

Erfindungsgemäß enthält der Elektromotor eine Logik- Niederspannungsversorgung und eine Steuerung mit einem Mikrokontroller und einem elektronischen Schaltelement; mittels dem die Motorlogik-Niederspannungsversorgung in Abhängigkeit von einem Sollwertsignal durch einen Mikrokontroller aus- und einschaltbar ist.

Vorzugsweise handelt es sich bei dem Elektromotor um einen elektronisch kommutierten Gleichstrommotor.

Der Elektromotor ist insbesondere Bestandteil eines Gebläses.

Vorzugsweise ist der Mikrokontroller ausgelegt, das Sollwertsignal im Zeitverlauf derart auszuwerten, dass die Motorlogik-Niederspannungsversorgung dann, wenn das Sollwertsignal über eine vorgegebene Zeitdauer einen Vorgabewert unterschreitet, mittels des elektronischen Schaltelementes abgeschaltet wird.

Es kann mit Vorteil ferner vorgesehen werden, dass der Mikrokontroller ausgelegt ist, selbst in Abhängigkeit von dem Sollwertsignal in einen "Sleep-Modus" bzw. Standby-Zustand überzugehen. Dabei kann insbesondere weiter vorgesehen sein, dass der Mikrokontroller ferner ausgelegt ist, das Sollwertsignal im Zeitverlauf derart auszuwerten, dass der Mikrokontroller dann, wenn das Sollwertsignal über eine vorgegebene Zeitdauer einen Vorgabewert unterschreitet, selbst in den "Sleep-Modus" bzw. Standby-Zustand übergeht.

Ferner ist der Mikrokontroller bevorzugt so ausgelegt, um im Sleep-Modus oder Standby-Zustand bei einer Änderung des Sollwertsignals aus dem "Sleep-Modus" oder Standby-Zustand in einen Betriebszustand überzugehen, eine Betätigung des elektronischen Schaltelementes zu veranlassen und die Motorlogik-Niederspannungsversorgung wieder einzuschalten.

Eine weitere vorzugsweise Ausgestaltung besteht darin, dass weiterhin eine Schnittstelleneinrichtung zur Zuführung des Sollwertsignals zu dem Mikrokontroller vorgesehen ist.

Der Mikrokontroller und/oder ggf. die Schnittstelleneinrichtung wird/werden während des "Sleep-Modus" oder Standby-Zustandes des Mikrokontrollers durch eine Hilfsversorgung mit Energie versorgt. Vorzugsweise ist die Hilfsversorgung eine spezielle leistungsarme Hilfsniederspannungsversorgung, insbesondere mit höchstens einem Zehntel der Leistungsaufnahme der Motorlogik-Niederspannungsversorgung. Alternativ oder zusätzlich kann ferner für die Hilfsversorgung vorgesehen sein, dass sie mittels eines hochohmigen Spannungsteilers mit Zenerdiode realisiert ist, wobei mit Vorzug weiter vorgesehen sein kann, dass diese Schaltung gleichzeitig als Entladekreis eines Zwischenkreiskondensators fungiert.

Bevorzugt handelt es sich bei dem Sollwertsignal um ein analoges Signal oder ein pulsbreitenmoduliertes Signal.

Weiterhin kann mit Vorzug vorgesehen sein, dass die Motorlogik-Niederspannungsversorgung die komplette Versorgung des Betriebs der Steuerung übernimmt, die vorzugsweise auf einer Leiterplatte aufgebaut ist.

Es ist außerdem bevorzugt, wenn die Motorbetrieb-Niederspannungsversorgung als Phasenanschnittsschaltung, als Abwärtswandler, als Schaltnetzteil oder vergleichbare Topologie aufgebaut ist.

Weitere bevorzugte und/oder vorteilhafte Ausgestaltungen der Erfindung und ihrer einzelnen Aspekte ergeben sich aus den Ansprüchen und deren Kombinationen sowie den gesamten vorliegenden Anmeldungsunterlagen.

Die Erfindung wird anhand von Ausführungsbeispielen nachfolgend unter Bezugnahme auf die Zeichnung lediglich exemplarisch näher erläutert, in der
- Fig. 1: ein schematisches Blockschaltbild einer ersten Ausführungsform der Steuerung des Elektromotors zeigt,
- Fig. 2: ein schematisches Blockschaltbild einer konkreten Anwendung der Steuerung des Elektromotors zeigt, und
- Fig. 4: ein detailliertes Blockschaltbild einer konkreten Ausführungsform der Steuerung des Elektromotors zeigt.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die Merkmalskombinationen innerhalb dieser Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

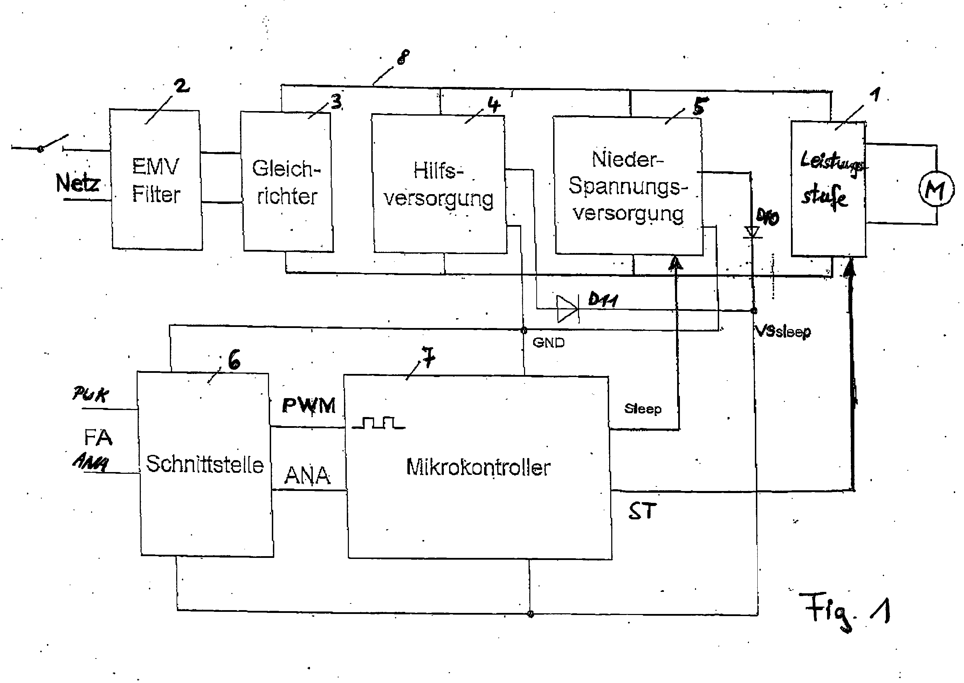

Die Fig. 1 beschreibt eine Ansteuerschaltung für einen kollektorlosen Gleichstrommotor (M), wie sie z.B. für ein Gebläse verwendet werden kann.

Der Motor (M) wird über eine Leistungsstufe (1) angesteuert und kommutiert und wird mit einer Motorspannung von ca. 325V DC betrieben. Ferner enthält die Schaltung einen EMV-Filter (2), der eingangsseitig mit dem Wechselspannungsnetz, vorzugsweise über einen EIN/AUS-Schalter verbunden ist und ausgangsseitig an einen Gleichrichter (3) angeschlossen ist. Der Gleichrichter (3) erzeugt eine Ausgangsgleichspannung (8) von ca. 325 V und versorgt, wie oben bereits erwähnt, die Leistungsstufe (1) des Motors (M).

Weiterhin ist eine Hilfsversorgung (4) und eine Niederspannungsversorgung (5) an die Ausgangsgleichspannung (8) angeschlossen.

Die Niederspannungsversorgung (5) dient der Spannungsversorgung von Bauteilen der Kommutierungselektronik des Motors (M) in der Leistungsstufe (1) und beträgt ca. 12V DC.

Die Hilfsversorgung (4) dient der Spannungsversorgung des Mikrokontrollers (7) und der Schnittstelle (6).

Die Schnittstelle (6) weist einen Eingangsanschluss (FA) auf, der dem Kunden als Steuerleitung zum Betrieb des Motors zur Verfügung gestellt wird. Hier kann der Kunde mittels eines pulsweitenmodulierten Signals PWM oder eines analogen Signals (ANA) die Geschwindigkeit des Motors bzw. Gebläses steuern. Ausgangsseitig ist die Schnittstelle (6) an einen Mikrokontroller (7) angeschlossen, der einen SLEEP-Ausgang aufweist und mit der Niederspannungsversorgung verbunden ist. Es kann aber auch kein spezieller SLEEP-Ausgang vorgesehen sein, wobei dann lediglich der Ausgangspegel (0 oder 1) zu Aktionen in der Schaltung führt.

Weiterhin weist der Mikrokontroller einen Ausgang ST auf, der mit der Leistungsstufe 1 verbunden ist und zur Drehzahleinstellung dient.

### Funktionsweise:

Beim Betrieb des Motors liegt an der Schnittstelle (6) am Anschluss (FA) z.B. ein PWM-Signal, dessen Impulsbreite ein Maß für Drehzahl des Motors darstellt. Man spricht hier von 0 bis 100% PWM, wobei der Motor bei 100% PWM seine MaximalDrehzahl einnimmt (oder umgekehrt) und bei ca. 0% abgeschaltet wird.

Die Schnittstelle (6) gibt dieses Signal eventuell in der Spannungshöhe angepasst an den Mikrokontroller (7) weiter, der die Kommutierung des Motors entsprechend dem Eingangs-PWM-Signal durchführt und damit die Drehzahl des Motors bzw. Gebläses steuert. Die Drehzahlsteuerung des Motors erfolgt über die Steuerleitung ST zur Leistungsstufe 1.

Die Eingangsspannung, die der Kunde an den Eingang FA der Schnittstelle anlegen kann, kann auch aus einem analogen Signal von z.B. 0 bis 10V bestehen, das dann als analoges Signal an den Mikrokontroller weitergegeben wird. In diesem Falle bedeuten ca. 0V Stillstand des Motors und 10V die volle Drehzahl.

Bei Reduzierung des PWM-Signals auf ca. 0% PWM bzw. ca. 0V bei analoger Spannung am Eingang FA der Schnittstelle (6) wird der Motor ausgeschaltet. Zu diesem Zeitpunkt werden zunächst noch alle Bauteile bzw. Logikelemente entsprechend dem derzeitigen Betriebszustand der Schaltung bestromt bzw. mit Spannung versorgt.

Nach Ablauf einer kurzen festgelegten Zeitdauer, innerhalb der sich an den Eingangsanschlüssen FA der Schnittstelle (6) keine Veränderungen mehr ergeben, d.h. PWM-Signal auf 0% bzw. ANA = 0V, geht der Mikrokontroller (7) in einen derartigen Zustand, dass er an seinem SLEEP-Ausgang ein Signal abgibt, das die Niederspannungsversorgung (5) abschaltet. Dadurch werden die Bauteile von Niederspannungsversorgung (5) und Leistungsendstufe (1) stromlos - Mikrokontroller (7) und Schnittstelle (6) werden dabei von der Hilfsversorgung (4) mit Spannung versorgt. In diesem Zustand ist nun die Leistungsaufnahme mindestens 10-fach geringer als in einem Ruhezustand, bei dem die Abschaltung der Niederspannungsversorgung nicht erfolgt.

Ändert sich das Signal FA am Eingang der Schnittstelle (6), so wird dieses Signal an den Mikrokontroller (7) weitergeleitet. Dadurch wird der Mikrokontroller veranlasst, das SLEEP-Zustands-Signal an seinem Ausgang zu beenden. Dies führt zur Wiedereinschaltung der Niederspannungsversorgung und damit zur normalen Spannungsversorgung der Motorlogik.

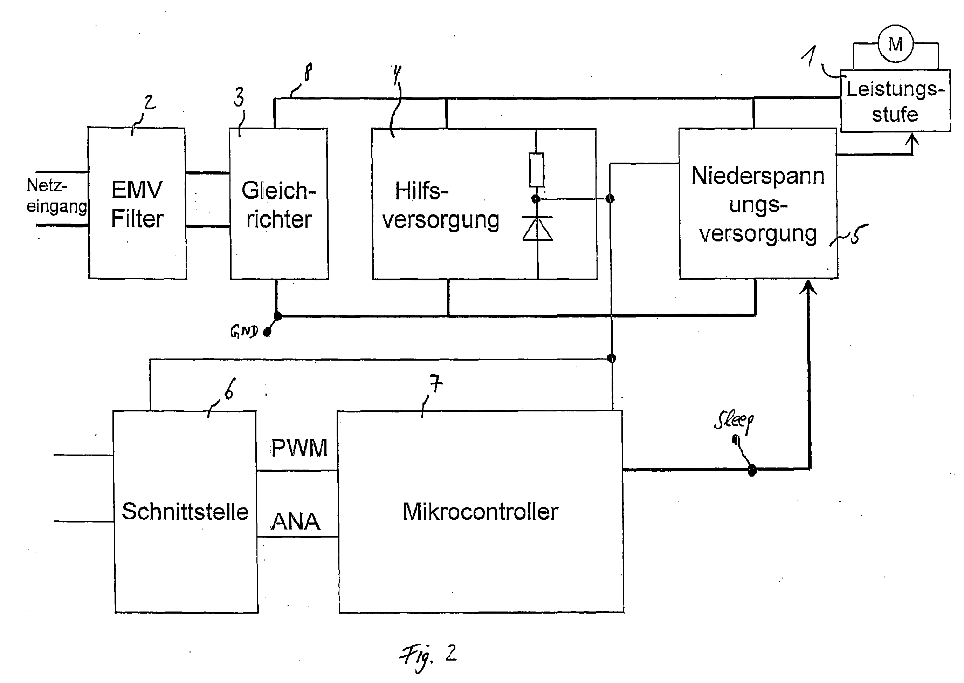

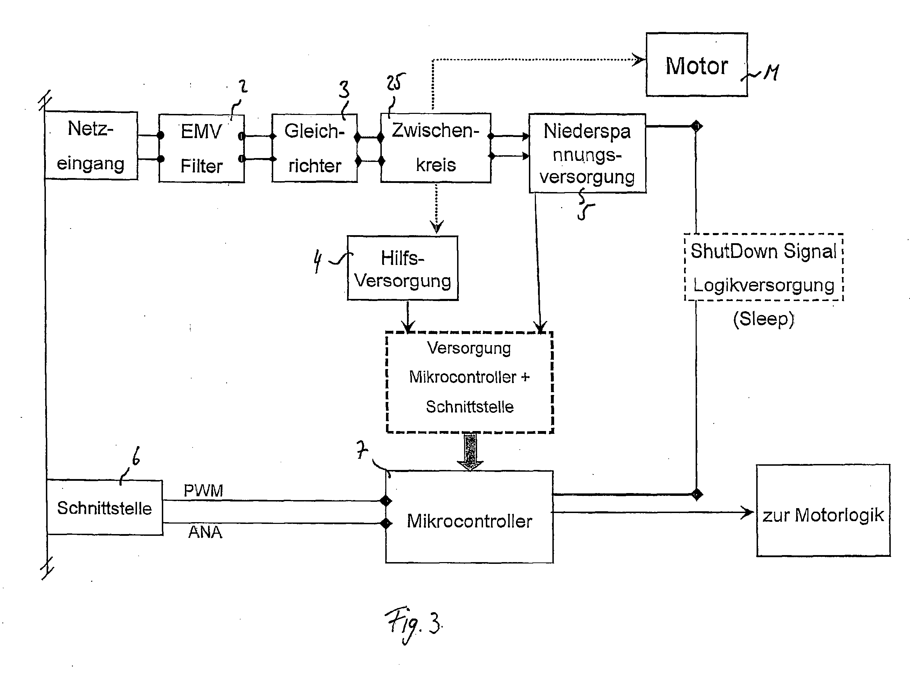

In der Figur 3 ist die in den Figuren 1 und 2 dargestellte erfinderische Lösung konkretisiert und mit einem ingenieursmäßig korrekten Blockschalbild wiedergegeben.

Die Niederspannungsversorgung (5) erzeugt aus den 325V vom Zwischenkreis (25) die Versorgungsspannung für den Logikkreis (13,5V) und puffert diese in einen Elektrolytkondensator.

Die Hilfsversorgung (StandBy-Versorgung) (4) erzeugt aus dem Zwischenkreis (25) auf einfachste und billigste Weise in Form einer Spannungsteilerschaltung mit z.B. Zenerdiode (12V) die Versorgungsspannung für die restliche Logik, nämlich den Mikrocontroller (7) und die Schnittstelle (6), während der StandBy Phase.

Die Versorgung des Mikrocontrollers (7) und der Schnittstelle (6) besteht aus Pufferkondensatoren und einem Festspannungsregler, der zum einen aus der Logikspannung sowie aus der Spannung aus der Hilfsversorgung (4) die notwendigen 5V erzeugt um den Mikrocontroller (7) sowie die restliche Logik inklusive der Schnittstelle (6) im Normalbetrieb sowie auch in der StandBy Phase zu versorgen.

Der Mikrocontroller (7) ist neben den regulären Steuerfunktionen im Normalbetrieb die Software derart ausgelegt, das er den Schaltungsblock zur Erzeugung der Logikspannung an Hand bestimmter Parameter abschaltet.

Variationen und Modifikationen sind möglich im Rahmen der nachfolgenden Ansprüche.

## Patentansprüche

1. Elektromotor mit einer Motorlogik-Niederspannungsversorgung (5) und einer Steuerung, die einen Mikrokontroller (7) und ein elektronisches Schaltelement enthält,
**dadurch gekennzeichnet,**
**dass** ein Eingang des Mikrokontrollers (7) mit einer Schnittstelleneinrichtung (6) verbunden ist und
**dass** die Schnittstelleneinrichtung (6) zur Zuführung eines Sollwertsignals zu dem Mikrokontroller (7) vorgesehen ist und
**dass** ein Ausgang des Mikrokontrollers (7) mit der Motorlogik-Niederspannungsversorgung (5) verbunden ist, um diese in Abhängigkeit von dem Sollwertsignal durch den Mikrokontrollers (7) aus- und einschalten zu können,
**dass** der Mikrokontrollers (7) ausgelegt ist, das Sollwertsignal im Zeitverlauf derart auszuwerten, dass die Motorlogik-Niederspannungsversorgung (5) dann, wenn das Sollwertsignal über eine vorgegebene Zeitdauer einen definierten Vorgabewert unterschreitet, mittels des elektronischen Schaltelementes abgeschaltet wird,
**dass** die Schnittstelleneinrichtung (6) einen Eingangsanschluss (FA) für ein pulsweitenmoduliertes Signal (PWM) oder ein analoges Signal (ANA) zur Steuerung der Geschwindigkeit des Elektromotors aufweist, und
**dass** es sich bei dem Sollwertsignal um das analoge Signal (ANA) oder das pulsweitenmodulierte Signal (PWM) handelt.

2. Elektromotor nach Anspruch 1,
**dadurch gekennzeichnet,**
**dass** der Elektromotor ein insbesondere elektronisch kommutierter Gleichstrommotor (EC-Motor) ist.

3. Elektromotor nach Anspruch 1 oder 2,
**dadurch gekennzeichnet,**
**dass** der Elektromotor Bestandteil eines Gebläses ist.

4. Elektromotor nach einem der vorhergehenden Ansprüche,
**dadurch gekennzeichnet,**
**dass** der Mikrokontroller (7) ausgelegt ist, selbst in Abhängigkeit von dem Sollwertsignal in einen "Schlafzustand" (Sleep-Modus) oder Standby-Zustand überzugehen.

5. Elektromotor nach Anspruch 4,
**dadurch gekennzeichnet,**
**dass** der Mikrokontroller (7) ferner ausgelegt ist, das Sollwertsignal im Zeitverlauf derart auszuwerten, dass der Mikrokontroller (7) dann, wenn das Sollwertsignal über eine vorgegebene Zeitdauer einen Vorgabewert unterschreitet, selbst in den "Sleep-Modus" bzw. Standby-Zustand übergeht.

6. Elektromotor nach einem der vorhergehenden Ansprüche,
**dadurch gekennzeichnet,**
**dass** der Mikrokontroller (7) so ausgelegt ist, dass er im "Sleep-Modus" oder Standby-Zustand bei einer Änderung des Sollwertsignals aus dem "Sleep-Modus" oder Standby-Zustand in einen Betriebszustand übergeht, eine Betätigung des elektronischen Schaltelementes veranlasst und die Motorbetrieb-Niederspannungsversorgung (5) wieder einschaltet.

7. Elektromotor nach einem der vorhergehenden Ansprüche,
**dadurch gekennzeichnet,**
**dass** der Mikrokontroller (7) und/oder die Schnittstelleneinrichtung (6) während des "Sleep-Modus" bzw. Standby-Zustandes des Mikrokontrollers (7) durch eine Hilfsversorgung (4) mit Energie versorgt wird.

8. Elektromotor nach Anspruch 7,
**dadurch gekennzeichnet,**
**dass** die Hilfsversorgung (4) eine spezielle leistungsarme Hilfsniederspannungsversorgung ist, insbesondere mit höchstens einem Zehntel der Leistungsaufnahme der Motorlogik-Niederspannungsversorgung **(5).**

9. Elektromotor nach Anspruch 7 oder 8,
**dadurch gekennzeichnet,**
**dass** für die Hilfsversorgung (4) vorgesehen ist, dass sie mittels eines hochohmigen Spannungsteilers mit Zenerdiode realisiert ist.

10. Elektromotor nach Anspruch 9,
**dadurch gekennzeichnet,**
**dass** diese Schaltung gleichzeitig als Entladekreis eines Zwischenkreiskondensators fungiert.

11. Elektromotor nach einem der vorhergehenden Ansprüche,
**dadurch gekennzeichnet,**
**dass** die Motorlogik-Niederspannungsversorgung (5) die komplette Versorgung des Betriebs der Steuerung übernimmt, die auf einer Leiterplatte aufgebaut ist.

12. Elektromotor nach einem der vorhergehenden Ansprüche,
**dadurch gekennzeichnet,**
**dass** die Motorlogik-Niederspannungsversorgung (5) als Phasenanschnittsschaltung, als Abwärtswandler, als Schaltnetzteil oder vergleichbare Topologie aufgebaut ist.

## Claims

1. Electric motor comprising a motor logic low-voltage supply (5) and a control unit which contains a microcontroller (7) and an electronic switching element,
**characterised in that** an input of the microcontroller (7) is connected to an interface device (6) and
**in that** the interface device (6) is provided for feeding a target value signal to the microcontroller (7) and
**in that** an output of the microcontroller (7) is connected to the motor logic low-voltage supply (5) so as to allow the microcontroller (7) to activate and deactivate said motor logic low-voltage supply according to the target value signal,
**in that** the microcontroller (7) is designed to evaluate the target value signal over time in such a way that the electronic switching element switches off the motor logic lowvoltage supply (5) when the target value signal falls below a default value over a predetermined time period,
**in that** the interface device (6) comprises an input connection (FA) for a pulse-width-modulated signal (PWM) or an analogue signal (ANA) for controlling the speed of the electric motor, and
**in that** the target value signal is the analogue signal (ANA) or the pulse-width-modulated signal (PWM).

2. Electric motor according to claim 1,
**characterised in that** the electric motor is an in particular electronically commutated direct current motor (EC motor).

3. Electric motor according to either claim 1 or claim 2,
**characterised in that** the electric motor is a component of a fan.

4. Electric motor according to any of the preceding claims,
**characterised in that** the microcontroller (7) is designed to auto-switch to a sleep mode or a standby state according to the target value signal.

5. Electric motor according to claim 4,
**characterised in that** the microcontroller (7) is further designed to evaluate the target value signal over time in such a way that the microcontroller (7) auto-switches to the sleep mode or standby state when the target value signal falls below a default value over a predetermined time period.

6. Electric motor according to any of the preceding claims,
**characterised in that** the microcontroller (7) is designed such that, when the target value signal changes while said microcontroller is in the sleep mode or standby state, said microcontroller switches from the sleep mode or standby state into an operating state, actuates the electronic switching element and reactivates the motor-operation low-voltage supply (5).

7. Electric motor according to any of the preceding claims,
**characterised in that** the microcontroller (7) and/or the interface device (6) is supplied with energy by an auxiliary supply (4) while the microcontroller (7) is in the sleep mode or standby state.

8. Electric motor according to claim 7,
**characterised in that** the auxiliary supply (4) is a special, low-power auxiliary low-voltage supply, in particular having at most one tenth of the power uptake of the motor logic low-voltage supply (5).

9. Electric motor according to either claim 7 or claim 8,
**characterised in that** the auxiliary supply (4) is achieved by means of a high-resistance voltage divider having Zener diodes.

10. Electric motor according to claim 9,
**characterised in that** this circuit functions simultaneously as a discharge circuit of an intermediate circuit capacitor.

11. Electric motor according to any of the preceding claims,
**characterised in that** motor logic low-voltage supply (5) supplies the entire operation of the control unit, which is constructed on a printed circuit board.

12. Electric motor according to any of the preceding claims,
**characterised in that** the motor logic low-voltage supply (5) is constructed as a phase-angle circuit, a down converter, a switching-mode power supply, or comparable topology.

## Revendications

1. Moteur électrique comprenant une logique de moteur à basse tension d'alimentation (5) et une unité de commande, qui contient un microcontrôleur (7) et un élément de commutation électronique **caractérisé en ce que**
une entrée du microcontrôleur (7) est relié à un dispositif d'interface (6) et que ledit dispositif d'interface est prévu pour fournir un signal de valeur prescrite au microcontrôleur (7) et
que une sortie du microcontrôleur (7) est relié à la logique de moteur à basse tension d'alimentation (5) pour peut être mis sous et hors tension par le microcontrôleur (7) en fonction réponse au signal de valeur prescrite,
le microcontrôleur (7) est prévu pour évaluer le signal de valeur prescrite au fil du temps de telle manière que la logique de moteur à basse tension d'alimentation (5) est éteint par l'élément de commutation électronique lorsque le signal tombe en dessous d'une valeur par défaut définie pour une période de temps prédéterminée,
que le dispositif d'interface (6) comprends une borne d'entrée (FA) pour un signal modulé par une modulation d'impulsions en largeur (PWM) ou un signal analogue (ANA) pour commander la vitesse du moteur électrique, et
que le signal de valeur prescrite et le signal analogue (ANA) ou signal modulé par une modulation d'impulsions en largeur (PWM).

2. Moteur électrique selon la revendication 1, **caractérisé en ce que** le moteur électrique est un moteur à courant continu à commutation électronique, en particulier un (EC) moteur.

3. Moteur électrique selon la revendication 1 ou 2, **caractérisé en ce que** le moteur électrique fait partie d'une soufflante.

4. Moteur électrique selon l'une des revendications précédentes, **caractérisé en ce que** le microcontrôleur (7) est configuré pour se déplacer en réponse au signal de valeur prescrite dans un état "de veille" (Sleep-mode) ou en mode de veille (Standby-mode).

5. Moteur électrique selon la revendication 4, **caractérisé en ce que** le microcontrôleur (7) est configuré en outre d'évaluer le signal de valeur prescrite au cours du temps de telle sorte que le microcontrôleur (7) passe même dans le mode "de veille" ou le mode "Standby".

6. Moteur électrique selon l'une des revendications précédentes, **caractérisé en ce que** le microcontrôleur (7) est conçu de manière pour passer d'un mode "de veille" ou un mode de "Standby" au l'état de fonctionnement, pour provoquer une opération de l'élément de commutation électronique et pour allumer la logique de moteur à basse tension d'alimentation à nouveau.

7. Moteur électrique selon l'une des revendications précédentes, **caractérisé en ce que** le microcontrôleur (7) et/ou le dispositif d'interface (6) est alimenté par une alimentation en énergie auxiliaire (4) au cours du mode "de veille" ou du mode de "Standby" du microcontrôleur (7).

8. Moteur électrique selon la revendication 7, **caractérisé en ce que** l'alimentation en énergie auxiliaire (4) est une alimentation en énergie auxiliaire de faible puissance basse tension spéciale, en particulier à au plus un dixième de la consommation de puissance de la logique de moteur à basse tension d'alimentation (5).

9. Moteur électrique selon la revendication 7 ou 8, **caractérisé en ce que** l'alimentation en énergie auxiliaire (4) est réalisé par diviseur de tension à résistances avec diode Zener.

10. Moteur électrique selon la revendication 9, **caractérisé en ce que** ce circuit agit comme un circuit de décharge du condensateur du circuit intermédiaire.

11. Moteur électrique selon l'une des revendications précédentes, **caractérisé en ce que** la logique du moteur d'alimentation basse tension (5) prend en charge l'ensemble de fourniture de l'actionnement de la commande, qui est monté de préférence sur une carte de circuit.

12. Moteur électrique selon l'une des revendications précédentes, **caractérisé en ce que** la logique du moteur d'alimentation basse tension (5) est réalisé comme une commande en angle de phase, comme un convertisseur abaisseur de tension, une alimentation à découpage ou est construit à une topologie équivalent.
